# EUROPÄISCHE PATENTSCHRIFT

(11) **EP 4 043 082 B1**
(45) Veröffentlichungstag und Bekanntmachung des Hinweises auf die Patenterteilung: **13.03.2024**
(21) Anmeldenummer: 22154270.7
(22) Anmeldetag: 31.01.2022
(51) Int. Cl.: B01D 29/15, B01D 29/96

(54) **FILTERVORRICHTUNG UND FILTERELEMENT**
FILTER DEVICE AND FILTER ELEMENT
DISPOSITIF FILTRE ET ÉLÉMENT FILTRE

(30) Priorität: 13.02.2021 DE 102021000750
(43) Veröffentlichungstag der Anmeldung: 17.08.2022
(73) Patentinhaber: Hydac Filtertechnik GmbH, 66280 Sulzbach/Saar (DE)
(72) Erfinder: Hennes, Stefan, 66540 Neunkirchen (DE); Röder, Dirk, 66123 Saarbrücken (DE)
(74) Vertreter: Bartels und Partner, Patentanwälte

(56) Entgegenhaltungen:
- EP-A2- 0 562 501
- WO-A1-2020/104260
- US-A1- 2003 183 568
- US-B1- 7 143 897

## Beschreibung

Die Erfindung betrifft eine Filtervorrichtung mit einem Filterkopf und mit einem Filtertopf zur Aufnahme eines tauschbaren Filterelementes sowie das Filterelement selbst.

Durch DE 101 42 774 A1 ist eine gattungsgemäße Filtervorrichtung mit einem topfartigen Filtergehäuse bekannt, das eine Längsachse definiert, längs deren ein Filterelement in das Filtergehäuse einsetzbar und aus diesem herausnehmbar ist, und mit einer zum lösbaren Festlegen des Filterelementes im Filtergehäuse dienenden Halteeinrichtung, die an der Innenseite des Filtergehäuses und am Filterelement vorgesehene, miteinander zusammenwirkende erste und zweite Halteelemente aufweist, wobei zumindest die einen der Halteelemente eine zur Längsachse des Filtergehäuses konzentrische und zumindest einen Teil eines Gewindes bildende Gestalt besitzen, sodass das Filterelement nach Drehen um seine Längsachse durch eine formschlüssige Verbindung festgelegt ist. Die bekannte Lösung stellt eine Art Spin-On-Filter dar, bei dem der Filterkopf mit seiner Verrohrung an Ort und Stelle im angeschlossenen Hydraulikkreislauf verbleibt und der Filtertopf als Gehäuse zusammen mit dem Filterelement zwecks Tauschen eines verbrauchten Filterelementes gegen ein Neuelement ab- und wiederaufgeschraubt wird.

Bei solchen Filtervorrichtungen, bei denen, wie bei dem erwähnten Dokument, Elementaufnahmen in formschlüssiger Verbindung mit Gehäuseteilen, wie Gehäusestutzen und/oder Stutzen am Gehäusedeckel sind, müssen bei der Fertigung von Filtergehäuse und Filtergehäuseteilen äußerst enge Toleranzen eingehalten werden, um sicherzustellen, dass die Achsen jeweiliger Elementaufnahmen der Endkappen mit den Achsen der gehäuseseitigen und/oder deckelseitigen Halteelemente, wie Stutzen, genau fluchten. Fertigungstoleranzen bei der Gehäuseherstellung, namentlich bei Gehäusekonstruktionen in mehrteiliger Bauweise mit mehreren aneinandergesetzten Gehäuseteilen, können zu Fluchtungsfehlern führen, durch die es zu Verspannungen im Filterelement kommt, die Fehlfunktionen oder gar Beschädigung zur Folge haben. Insbesondere Filtervorrichtungen mit sehr langgestreckten Filterelementen sind von dieser Problematik betroffen, da hier bereits kleinste Winkelfehler und Positionsabweichungen großen Versatz am gegenüberliegenden Halteelement bedeuten.

Zur Lösung dieser Probleme ist in der WO 2020/104260 A1 bereits bei einer gattungsfremden In-Tank-Lösung, bei der der Filterkopf zusammen mit einem rohrartigen Filtergehäuse stationär an einem Vorratstank verbleibt und ein Filterelementwechsel erfolgt, in dem man den Filterkopf über seinen Gehäusedeckel öffnet, vorgeschlagen worden, im Bereich einer fußseitigen Aufnahme des Filterelementes am Filtergehäuse vorzusehen, dass die diesbezügliche Endkappe an einer gehäuseseitigen Elementaufnahme gelagert ist, wobei mittels einer mehr als einen Freiheitsgrad zur Verfügung stellenden Lagerung das Filterelement über diese Endkappe gelenkig an der Elementaufnahme gelagert ist. Die Lagerung weist eine konvex verlaufende Lagerfläche an der Endkappe auf, die in einer konkav verlaufenden Lagerfläche in der Elementaufnahme geführt ist, wobei die jeweilige Lagerfläche Bestandteil einer Schale ist, von denen mindestens eine einen Durchlass für Fluid aufweist. Die dahingehend bekannte Lösung baut relativ kompliziert auf und benötigt eine Vielzahl von zusätzlichen Bauteilen, um die Lagerung mit ihren einzelnen Lagerflächen in der Art eines Kugelgelenkes gegenüber dem Tankinneren zur rohrförmigen Gehäuseabschlussseite hin abzudichten.

Ausgehend von diesem Stand der Technik liegt der Erfindung die Aufgabe zugrunde, eine Filtervorrichtung der eingangs genannten Art dahingehend weiter zu verbessern, dass Fluchtungsfehler und Fertigungstoleranzen ausgeglichen werden können, wobei zugleich ein sicheres Betriebsverhalten bei rationeller und kostengünstiger Herstellung erreicht werden soll.

Die US 2003/0173568 A1 beschreibt ein Filterelement, wobei eine Ausgleichseinrichtung vorhanden ist, die Bestandteil des Filterelementes ist und die zwei Schalenteile aufweist, von denen das eine Schalenteil stationär am Filterelement festgelegt und das andere Schalenteil demgegenüber bewegbar geführt ist, wobei eines der beiden Schalenteile eine Durchgangsöffnung zur Führung eines Fluidstroms aufweist, und wobei das eine stationäre Schalenteil Bestandteil einer Endkappe des Filterelementes ist.

Die US 7 143 897 B1 zeigt einen Duschkopf mit einem Kugelgelenk auf.

Erfindungsgemäß ist diese Aufgabe durch eine Filtervorrichtung, die die Merkmale des Patentanspruches 1 in seiner Gesamtheit aufweist, sowie durch ein Filterelement mit den Merkmalen des Patentanspruches 14 gelöst.

Dadurch, dass gemäß dem kennzeichnenden Teil des Patentanspruches 1 eine zwischen Filterkopf und dem Filterelement wirkende Ausgleichseinrichtung vorhanden ist, die als Bestandteil des Filterelementes zwei Schalenteile aufweist, von denen das eine Schalenteil stationär im Filterelement festgelegt und das andere Schalenteil demgegenüber bewegbar ausgeführt ist, und dass eines der beiden Schalenteile eine Durchgangsöffnung zur Führung eines Fluidstroms aufweist, steht eine Ausgleichsmöglichkeit für mögliche Versatzfehler zur Verfügung, sodass eine Reduzierung der engen einzuhaltenden Toleranzgrenzen für die Fertigung ermöglicht ist und somit Filtervorrichtungen auch mit lang bauenden Filterelementen oder mit zusammengesetzten Filtergehäusen betriebssicher und mit günstigen Herstellungskosten fertigbar sind. Des Weiteren lassen sich beide Schalenteile stationär und bewegbar an zentraler Stelle am Filterelement anbringen, was bauraumsparend ist. Insbesondere erlaubt die erfindungsgemäße Filtervorrichtung beim Aufschrauben des Filtertopfes mit dem Filterelement am stationären Filterkopf, dass das Filterelement seine Einbaulage im Filtertopf beibehalten kann und ein Toleranz- und Fluchtungsfehlerausgleich nur an der Fluidübergangsstelle zwischen der Durchgangsöffnung der Ausgleichseinrichtung und den stationär angeordneten, fluidführenden Teilen des Filterkopfes stattfindet.

Das insoweit entsprechend ausgebildete Filterelement für den Einsatz in einer dahingehenden Filtervorrichtung wird zusammen mit der Ausgleichseinrichtung im verbrauchten Zustand gegen ein Neuelement getauscht, sodass gleichzeitig zusammen mit dem Filterelement auch immer eine neue Ausgleichseinrichtung zum Einsatz kommt, sodass dergestalt langfristig im Betrieb etwaig auftretende Undichtigkeiten im Bereich der Anlage der Lagerflächen miteinander erst gar nicht ins Gewicht fallen.

Unter einer Schale im Sinne der Erfindung und im Sinne der Definition in der technischen Mechanik wird dabei ein flächiges Tragwerk verstanden, das doppelt räumlich gekrümmt ist und das insbesondere Belastungen sowohl senkrecht als auch in seiner Ebene selbst aufnehmen kann. Schalen nutzen ihre Tragfähigkeit durch das Verteilen von Lasten über Membrankräfte, die über die Dicke der Schale konstant sind, optimal aus, sodass die Schalen bei geringem Gewicht eine hohe Steifigkeit aufweisen.

Vorzugsweise ist dabei vorgesehen, dass das eine stationäre Schalenteil Bestandteil einer Endkappe des Filterelementes ist und das andere bewegbare Schalenteil einen Kugelring ausbildet, der in Anlage mit dem stationären Schalenteil ist. Dergestalt sind die Schalenteile integraler Bestandteil der Endkappe des Filterelementes und sowohl in axialer als auch in radialer Richtung bauraumsparend in die Endkappe integriert. Ein besonderer Vorteil dieser Ausbildung der Lagerung über Schalen unter Einsatz eines Kugelringes als dem einen Schalenteil ist, dass die Durchgangsöffnung in der Elementkappe zur Führung des Filtratstroms gegenüber der Rohseite der Filtervorrichtung auf der Außenseite des Filterelementes auch im Bereich hoher Drücke verlässlich abgedichtet ist.

Bei einer weiteren bevorzugten Ausführungsform der erfindungsgemäßen Filtervorrichtung ist vorgesehen, dass das bewegbare Schalenteil an seiner dem Filterkopf zugewandten Seite eine ringförmige Dichteinrichtung aufweist, die auf ihrer freien, dem Filterkopf zugewandten Stirnseite einen Dichtring aufweist, der im festgelegten Zustand des Filterelementes gegen den Filterkopf verpresst ist. Dergestalt erfolgt mit zunehmender Aufschraubbewegung des Filtertopfes am Filterkopf eine axiale Abdichtung zwischen der Ausgleichseinrichtung und zugehörigen Teilen des Filterkopfes, sodass auch im Bereich der Übergabe des Filtratstroms vom Inneren des Filterelementes zur Filtratabgabeseite des Filterkopfes eine sichere Abdichtung gegenüber der Unfiltratseite der Filtervorrichtung erreicht ist.

Bei einer weiteren besonders bevorzugten Ausführungsform der erfindungsgemäßen Filtervorrichtung ist vorgesehen, dass eine Anlagefläche des Filterkopfes für den Dichtring eine schräg verlaufende Ebene aufspannt. Durch die bewusste Schrägstellung der Anlagefläche des Filterkopfes, was zu einem Winkelversatz zwischen der Längsachse der Durchgangsöffnung in der Ausgleichseinrichtung mit der korrespondierenden Längsachse von Teilen der Filtratabgabeführung im Filterkopf führt, sind Überbestimmungen vermieden, was die Dichtwirkung verbessert. Des Weiteren ist hierdurch auch eine Art Nachbauschutz erreicht, weil sich eben konventionelle Filterelemente nicht zwanglos in die Filtervorrichtung mit ihren Gehäuseteilen einwechseln lassen.

Besonders bevorzugt ist dabei vorgesehen, dass bezogen auf die Durchgangsöffnung das stationäre Schalenteil eine konkav verlaufende Anlagefläche aufweist, die in jeder Schwenkstellung des anderen Schalenteils in Anlage mit einer konvex gekrümmten Anlagefläche dieses Schalenteils ist. Darüber hinaus ist ferner vorzugsweise vorgesehen, dass das stationäre Schalenteil an seinen gegenüberliegenden freien Rändern, die einen hohlkugelartigen oder ringförmigen Aufnahmeraum für das andere schwenkbare Schalenteil definieren, jeweils einen Anschlagrand zur Begrenzung einer maximal möglichen Schwenkbewegung für dieses Schalenteil aufweist. Dergestalt ist das bewegbare Schalenteil in jeder seiner möglichen Schwenkbewegungen sicher im stationären Schalenteil der Filterelementkappe gelagert. Durch den jeweiligen Anschlagrand ist eine maximale Schwenkbewegung für das bewegbare Schalenteil vorgegeben. Das stationäre Schalenteil übergreift dabei das schwenkbare Schalenteil mit seiner konvex ausgebildeten Anlagefläche in diesem Anlagebereich vollständig.

Bei einer weiteren bevorzugten Ausführungsform der erfindungsgemäßen Filtervorrichtung ist vorgesehen, dass die Endkappe des Filterelementes mit den beiden Schalenteilen außenumfangsseitig einen Dichtrand aufweist zur Aufnahme eines Dichtringes, der in Umfangsrichtung radial über den Außenumfang des Filtermediums des Filterelementes vorsteht. Dergestalt ist eine Abdichtung der Endkappe des Filterelementes auch im außenumfangsseitigen Bereich durch Anlage sowohl mit dem Filtertopf als auch mit dem Filterkopf erreicht.

Dabei spannt der Dichtrand der Elementkappe mit dem Dichtring bevorzugt eine Ebene auf, die von dem schwenkbaren Schalenteil mit seiner ringförmigen Dichteinrichtung in Richtung des Filterkopfes übergriffen ist. Mit zunehmender Aufschraubbewegung im Sinne eines Einschraubens des Filtertopfes mit seinem Außengewinde entlang einer Innengewindestrecke des Filterkopfes kommt es dabei zu einer Verpressung des Dichtringes am Dichtrand der Elementkappe, als auch zu einer Verpressung des axial vorspringenden Dichtrandes in Form des Dichtringes an der freien Stirnseite des bewegbaren Schalenteils, der einstückig mit diesem Schalenteil verbunden ist.

Für eine störungsfreie Fluidströmung innerhalb der Filtervorrichtung ist dabei bevorzugt vorgesehen, dass der Dichtrand der Endkappe mittels einzelner Stege auf Abstand zu dem stationären Schalenteil gehalten ist und dass einzelne Durchlassöffnungen zwischen den Stegen und dem Dichtrand vorhanden sind. Dabei können die einzelnen Abstandsstege, die einen gleichförmigen radialen Abstand bzw. einen gleichförmigen Abstand in Umfangsrichtung zueinander einnehmen, den Strömungsverlauf des Unfiltratstroms auf die Außenseite des Filterelementes begünstigen.

Bei einer weiteren bevorzugten Ausführungsform der erfindungsgemäßen Filtervorrichtung ist vorgesehen, dass der Filterkopf ein federbelastetes Rückschlagventil aufweist, das in seiner Schließstellung den Fluidweg zwischen der Durchgangsöffnung des schwenkbaren Schalenteils und einer Filtratabgabeöffnung zur Führung eines Filtratstroms im Filterkopf sperrt und in seiner Öffnungsstellung freigibt. Das dahingehende Rückschlagventil weist nur eine geringe Öffnungskraft auf und stellt sicher, dass Fluid nicht ungewollt von der Filtratabgabeseite des Filterkopfes zurück auf die Innenseite des Filterelementes gelangen kann. Ferner wird mit Entfernen oder Abschrauben des Filtertopfes vom Filterkopf ein Rückfluss an Leckagestrom vermieden, was ansonsten beim Filterelementwechsel zu ungewollt austretendem Reinfluid führen könnte. Insoweit stützt sich bevorzugt das Schließteil des Rückschlagventils in der Schließstellung federbelastet an einem im Filterkopf im Fluidweg festgelegten Anlagering ab, der hierfür einen Dichtsitz ausbildet.

Bei einer weiteren bevorzugten Ausführungsform der erfindungsgemäßen Filtervorrichtung ist vorgesehen, dass der Filterkopf mindestens ein Bypassventil aufweist, das bei mit Partikelverschmutzung zugesetztem Filterelement eine Fluidverbindung von der Unfiltratseite zur Filtratabgabeseite im Filterkopf über die einzelnen Durchflussöffnungen in der Endkappe freigibt. Kommt es insoweit also durch Partikelverschmutzung zu einer Verblockung des Filterelementes, wird der in der Regel dann bereits schon mehrfach abgereinigte Unfiltratstrom unter Umgehung des Filterelementes direkt auf die Filtratabgabeseite des Filterkopfes geführt. Dergestalt ist ein Weiterbetrieb von an den Hydraulikkreis angeschlossenen Komponenten sichergestellt.

Das erfindungsgemäße Filterelement, insbesondere vorgesehen für die vorstehend beschriebene Filtervorrichtung, weist die diesbezüglichen Merkmale betreffend die Ausgleichseinrichtung in einer der Elementkappen auf sowie die umfangsseitige Dichteinrichtung mit tauschbarem Dichtring.

Die besondere Ausgestaltung eines dahingehenden Filterelementes ist Gegenstand der Unteransprüche 15 fortfolgende.

Im Folgenden wird die erfindungsgemäße Filtervorrichtung nebst Filterelement anhand eines Ausführungsbeispiels nach der Zeichnung näher erläutert. Dabei zeigen in prinzipieller und nicht maßstäblicher Darstellung die
- Fig. 1: in der Art einer Explosionszeichnung im Längsschnitt das in ei-nem Filtertopf aufgenommene Filterelement und in Blickrichtung auf die Fig. 1 gesehen darüberliegend den Filterkopf;
- Fig. 2: in der Art einer Längsschnittdarstellung den Gegenstand nach der Fig. 1, bei dem der Filtertopf mit dem Filterelement in den Filterkopf durch Einschrauben eingesetzt ist; und
- Fig. 3: in der Art einer Längsschnittdarstellung die obere Elementkappe des in den Fig. 1 und 2 dargestellten Filterelementes mit Ausgleichseinrichtung und außenumfangsseitig angeordneter Dichtrandgeometrie mit O-förmigem Dichtring.

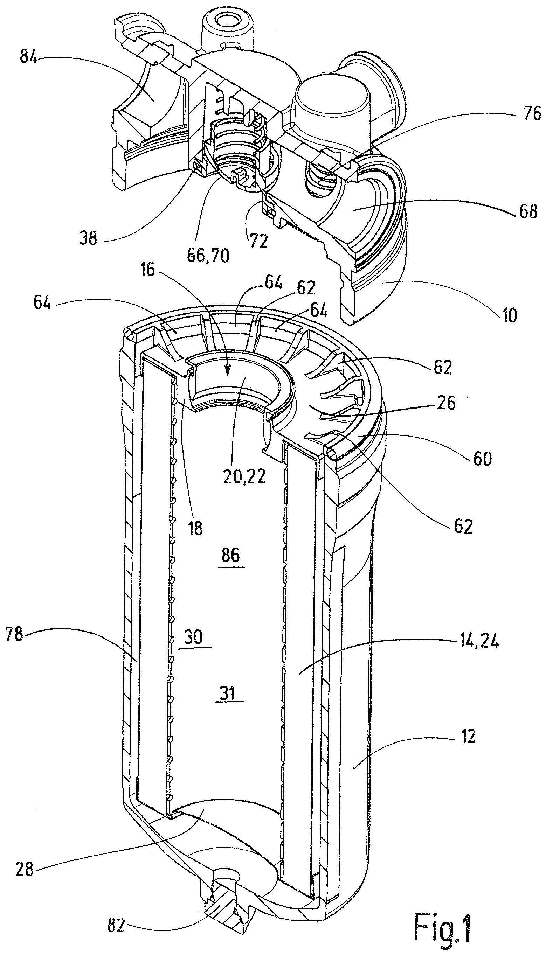

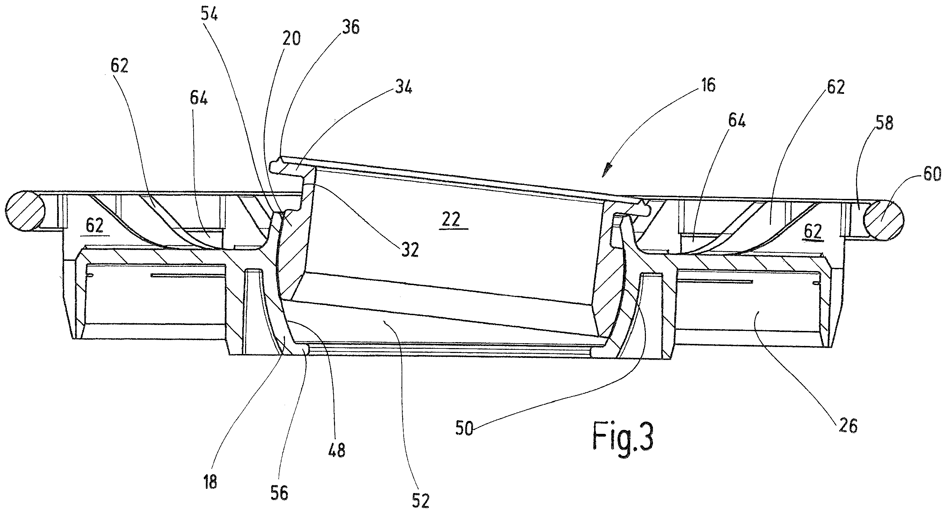

Die in der Fig. 1 mit ihren einzelnen Komponenten in der Art eines Längsschnittes dargestellte Filtervorrichtung weist einen Filterkopf 10 auf sowie einen Filtertopf 12, in den ein tauschbares Filterelement 14 aufgenommen ist. Zwischen dem Filterkopf 10 und dem Filterelement 14 ist eine als Ganzes mit 16 bezeichnete Ausgleichseinrichtung vorhanden, wie sie in der Fig. 3 näher dargestellt ist. Die Ausgleichseinrichtung 16 ist Bestandteil des Filterelementes 14 und weist zwei Schalenteile 18, 20 auf, von denen ein Schalenteil 18 stationär am Filterelement 14 festgelegt und das andere Schalenteil 20 demgegenüber bewegbar geführt ist. Ferner weist das innere Schalenteil 20 eine zylindrische Durchgangsöffnung 22 zur Führung eines Fluidstroms auf.

Das Filterelement 14 weist ein Filtermedium oder Filterelementmaterial 24 auf, das sich zwischen einer oberen Endkappe 26 und einer unteren Endkappe 28 erstreckt. Ferner stützt sich das Elementmaterial 24 in Durchströmungsrichtung von außen nach innen gesehen an einem zylindrischen, perforierten Stützrohr 30 ab, das einen zylindrischen Innenraum des Filterelementes 14 als Filtratraum 31 umfasst. Der dahingehende Filtratraum 31 ist nach unten hin von einem Bodenteil der unteren Endkappe 28 abgeschlossen. Ansonsten ist die Ausgleichseinrichtung 16 mit ihren beiden Schalenteilen 18, 20 integraler Bestandteil der oberen End- oder Elementkappe 26. Insbesondere ist das stationäre Schalenteil 18 einstückiger Bestandteil der oberen Endkappe 26, die beispielsweise im Rahmen eines Kunststoff-Spritzgießverfahrens erhalten ist. Das andere bewegbare Schalenteil 20 ist in der Art eines Kugelringes ausgebildet, das außenumfangsseitig in Anlage mit der Innenumfangsseite des stationären Schalenteils 18 ist. Ein Kugelring im Sinne dieser Erfindungslösung ist der mittige Teil einer Vollkugel, der aus einer Kugel mit einer zylindrischen Bohrung besteht, die hier insoweit die Durchgangsöffnung 22 bildet. Er wird außen von einer symmetrischen Kugelzone und innen von der Mantelfläche eines geraden Kreiszylinders begrenzt (vgl. Wikipedia). Sofern gemäß der Fluidführung durch die Darstellung nach der Fig. 3 das bewegbare Schalenteil 20 gekippt ist, bildet insoweit der freigelassene Querschnitt des stationären Schalenteils 18 gleichfalls einen Teil der Durchgriffsöffnung 22 aus.

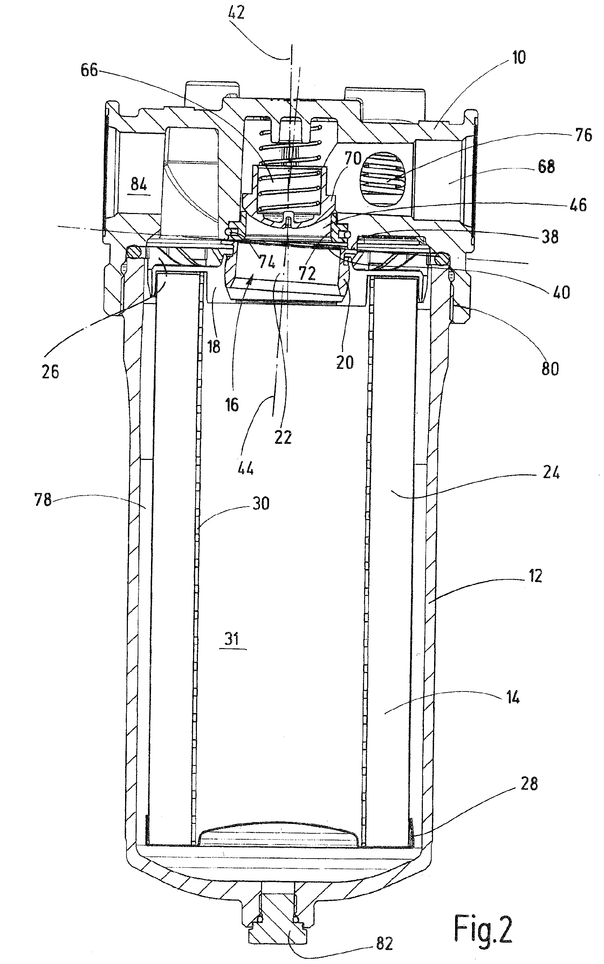

Über eine ringförmige Abstandsnut 32 ist vom Schalenteil 20 axial beabstandet eine ringförmige Dichteinrichtung 34 vorhanden, die auf ihrer freien, dem Filterkopf 10 zugewandten ebenen Stirnseite einen Dichtring 36 aufweist, der im festgelegten Zustand gemäß der Darstellung nach der Fig. 2 gegen benachbarte Teile des Filterkopfes 10 in abdichtender Weise verpresst ist. Im Querschnitt gesehen ist der Dichtring 36 aus einer dreieckförmigen Dichtlippe gebildet, die einstückiger Bestandteil des bewegbaren Schalenteils 20 ist. Der Außenumfang der Dichteinrichtung 34 ist dabei im Durchmesser gesehen größer als der Außendurchmesser des Schalenteils 20 an seiner breitesten, mittleren Stelle gewählt.

Wie sich insbesondere aus der Darstellung nach der Fig. 2 ergibt, spannt die zugehörige ringförmige Anlagefläche 38 des Filterkopfes 10 für den Dichtring 36 eine schräg verlaufende Ebene 40 auf. Im festgelegten Zustand des Filtertopfes 12 am Filterkopf 10 folgt die Ausgleichseinrichtung 16 gemäß der Darstellung nach der Fig. 3 diesem ebenen Verlauf der Ebene 40 für einen Abdichtvorgang zwangsläufig nach. Dergestalt ist ein Winkelversatz geschaffen zwischen einer Längsachse 42 des Filterkopfes 10 und einer Längsachse 44 durch die Mitte des bewegbaren Schalenteiles 20. Insoweit steht also die Längsachse 44 senkrecht auf der fiktiven Ebene 40 auf. Für die dahingehende Schrägneigung der Ebene 40 ist die kreisrunde respektive zylindrische Filtratöffnung 46 im Filterkopf 10 auf der rechten Seite mittels der dortigen Anlagefläche 38 stegartig verlängert gegenüber dem zugeordneten Anlagesteg auf der gegenüberliegenden Seite, wobei die Stegführung von kurzer zu langer Steglänge fließend ineinander übergeht, aber dabei in jedem Fall randseitig von der Dichteinrichtung 34 mit dem Dichtring 36 übergriffen ist, der in Anlage mit der Anlagefläche 38 ist. Der angesprochene Winkelversatz zwischen den Längsachsen 42, 44 unter Einbezug der schräg geneigten Ebene 40 nebst zugehöriger Dichteinrichtung 36 macht deutlich, dass etwaig in diesem Bereich vorhandene Unregelmäßigkeiten von der Materialseite her einschließlich Fluchtungsfehler über die Ausgleichseinrichtung 16 ohne Weiteres ausgeglichen werden können. Im vorliegenden Fall ist die Schräganordnung für die Ebene 40 jedoch bewusst gewählt, um dergestalt einen Nachbauschutz in dem Sinne zu erhalten, dass eben konventionelle Filterelemente als Plagiat nicht ohne Weiteres in die Filtervorrichtung nach den Fig. 1 und 2 einwechselbar sind.

Wie weiter die Fig. 3 zeigt, weist bezogen auf die mittlere Durchgangsöffnung 22 das stationäre Schalenteil 18 eine konkav verlaufende Anlagefläche 48 auf, die in jeder Schwenkstellung des anderen Schalenteils 20 in Anlage mit einer konvex gekrümmten Anlagefläche 50 dieses Schalenteils 20 ist. Die Krümmungen der Anlageflächen 48, 50 entsprechen einander derart, dass das Schalenteil 20 hemmnisfrei im Schalenteil 18 abgleiten kann. Wie sich weiter aus der Fig. 3 ergibt, weist das stationäre Schalenteil 18 an seinen gegenüberliegenden freien Rändern, die einen hohlkugelartigen oder ringförmigen Aufnahmeraum 52 für das schwenkbare Schalenteil 20 definieren, jeweils einen Anschlagrand 54, 56 auf zur Begrenzung einer maximal möglichen Schwenkbewegung für das bewegbare Schalenteil 20. Ist das Schalenteil 20 in seiner maximal ausgelenkten Stellung gemäß der Darstellung nach der Fig. 3 schlägt die Dichteinrichtung 34 mit ihrem unteren Rand an den oberen Anschlagrand 54 an und der untere Anschlagrand 46 ist in Richtung der Mitte der Durchgriffsöffnung 22 radial nach innen gezogen und kann dergestalt die Schwenkbewegung des Schalenteils 20 mitbegrenzen, was eine zusätzliche Sicherheit bietet, falls aus irgendeinem Grund der obere Anschlagrand 54 ungewollt nachgeben sollte.

Die obere Endkappe 26 des Filterelementes 14 mit den beiden Schalenteilen 18, 20 weist außenumfangsseitig einen Dichtrand 58 zur Aufnahme eines Dichtringes 60 auf, beispielsweise in Form eines O-Ringes aus Elastomermaterial. Wie sich aus den Figuren ergibt, steht der Dichtring 60 in Umfangsrichtung gesehen, radial über den Außenumfang des Filtermediums respektive Filterelementmaterials 24 des Filterelementes 14 an jeder Stelle vor. Insbesondere ist der Dichtring 60 in einer Ringnut im Dichtrand 58 tauschbar aufgenommen und steht mit einem geringen axialen Überstand im nicht verpressten Zustand nach oben und unten hin über den Dichtrand 58 vor. Der dahingehende Dichtrand 58 der Endkappe 26 spannt mit dem genannten Dichtring 60 eine fiktive Ebene auf, die von dem schwenkbaren Schalenteil 20 mit seiner ringförmigen Dichteinrichtung 34 in Richtung des Filterkopfes 10 gemäß der Darstellung nach der Fig. 3 zumindest auf der linken Seite teilweise übergriffen ist. Dergestalt sind zwei voneinander unabhängige Dichtsysteme 36, 60 geschaffen, die in jeder Einbausituation des Filterelementes 14 eine Anpassungsmöglichkeit schaffen, sodass unter Ausgleich von Toleranz- und Lagerfehlern unter Einbezug eines Plagiatschutzes im Betrieb der Filtervorrichtung eine sichere Abdichtung zwischen Unfiltraträumen und Filtraträumen der Filtervorrichtung geschaffen ist.

Der Dichtrand 58 der Endkappe 26 ist mittels einzelner Stege 62 auf Abstand zu dem stationären Schalenteil 18 gehalten, wobei sich die Stege 62 strahlenartig nach außen hin erstrecken. Die über einen Außenumfangsrand der Endkappe 26 vorspringenden Stege 62 verbreitern sich von ihrer Höhe her und gehen als einstückiger Bestandteil der Endkappe 26 entlang der Innenumfangsseite in den Dichtrand 58 über, der insoweit über den Überstand der Stege 62 nach außen über den Außenumfang der Endkappe 26 vorspringt. Aufgrund des genannten Abstandes sind einzelne Durchlassöffnungen 64 zwischen den Stegen 62 und dem Dichtrand 58 gebildet.

Wie sich insbesondere aus den Fig. 1 und 2 ergibt, weist der Filterkopf 10 ein federbelastetes Rückschlagventil 66 auf, das in seiner in den Figuren gezeigten Schließstellung den Fluidweg zwischen der Durchgangsöffnung 22 des schwenkbaren Schalenteils 20 und einer Filtratabgabeöffnung 68 zur Führung eines Filtratstroms im Filterkopf 10 sperrt und in seiner Öffnungsstellung als Filtratablauf in eine nicht näher dargestellte Verrohrung am Filterkopf 10 abführt. Das kalottenartig ausgebildete Schließteil 70 des Ventils 66 stützt sich in seiner Schließstellung federbelastet an einem im Filterkopf 10 im Fluidweg festgelegten Anlagering 72 ab, der insoweit einen Dichtsitz für das Rückschlagventil 66 ausbildet. Der dahingehende Anlagering 72 ist mittels eines Sprengringes 74 in der Fluidausnehmung im Filterkopf 10 gehalten.

Des Weiteren weist der Filterkopf 10 mindestens ein Bypassventil 76 auf, das in den Fig. 1 und 2 nur teilweise dargestellt ist und das bei mit Partikelverschmutzung zugesetztem Filterelement 14 eine Fluidverbindung von der Unfiltratseite 78 zur Filtratabgabeseite, respektive Filtratabgabeöffnung 68, im Filterkopf 10 über die einzelnen Durchflussöffnungen 64 in der oberen Endkappe 26 freigibt. Der Filtertopf 12 mit dem Filterelement 14 ist über eine Schraubverbindung 80 in wiederlösbarer Weise mit dem Filterkopf 10 verbunden, wobei mit zunehmender Aufschraubtiefe der Dichtring 60 des Filterelementes 14 ebenso wie der Dichtring 36 auf der freien Stirnseite des schwenkbaren Schalenteils 20 gegen den Filterkopf 10 unter Bildung einer Abdichtung verpresst ist.

Der Filtertopf 12 ist nach unten hin geschlossen ausgebildet und weist bodenseitig eine Ablassschraube 82 auf. In der in Fig. 2 zusammengebauten Betriebsstellung strömt Unfiltrat in Form von Fluid, beispielsweise in Form eines mit Partikelverschmutzung versehenen Hydraulikmediums über den Zulauf 84 und über die fensterartigen Durchlassöffnungen 64 in den Unfiltratraum ein, der die Unfiltratseite 78 bildet. Der dahingehende Unfiltratstrom gelangt weiter von außen nach innen und demgemäß von Partikelverschmutzungen durch das Elementmaterial 24 abgereinigt in den Filtratraum 31 und mithin auf die Filtratseite 86. Von dort aus gelangt der Filtratstrom über die Ausgleichseinrichtung 16 mit der Durchgriffsöffnung 22 und nach Passieren des insoweit geöffneten Rückschlagventils 66 auf die Filtratabgabeseite 68 im Filterkopf 10. Wird der Filtertopf 12 über die Schraubverbindung 80 vom stationär angeordneten Filterkopf 10 gelöst, wird der außenumfangsseitige Dichtring 60 freigegeben, der insoweit mit seiner Unterseite und dem Dichtrand 58 auf der freien Stirnseite am oberen Topfende des Filtertopfes 12 aufliegt. Bei dem dahingehenden Abschraubvorgang wird das Rückschlagventil 66 geschlossen und es kann kein Leckagestrom ungewollt nach außen treten. Etwaig noch vorhandenes Fluid im Filtertopf 12 kann über die Ablassschraube 82 zur Umgebung hin in einen nicht näher dargestellten Aufnahmebehälter abgelassen werden. Anschließend kann das Filterelement 14 über die Oberseite des Filtertopfes 12 entnommen werden und bedarfsweise gegen ein Neuelement getauscht oder alternativ abgereinigt werden. Anschließend ist dann der derart betriebsbereite Filtertopf 12 mit dem Neuelement 14 auf den Filterkopf 10 erneut aufzuschrauben. Die technische Bezeichnung Aufschrauben ist hier gleichzusetzen mit dem tatsächlich stattfindenden Einschraubvorgang des Filtertopfes 12 in den insoweit randseitig überstehenden Filterkopf 10.

Mit der erfindungsgemäßen Lösung wird ein Filterelement mit außenliegender Dichtung 60 mit einem sphärisch gelagerten Innenteil 20 der Elementkappe 26 kombiniert. Durch den Außenring 58 mit Dichtung 60 wird das Element 14 zwischen Kopf 10 und topfartigem Gehäuse 12 eingespannt. Dadurch entsteht eine Kraft in Achsrichtung entlang der Längsachse 42. Die Kugelkalotte 20 wird auf einen Dichtsitz gepresst, der aus Komponenten 38 des Filterkopfes 12 gebildet ist. Dieser Dichtsitz ist im Kopf 10 schräg angeordnet und durch das sphärisch gelagerte Innenteil 20 der Kappe 26 kann dieser Schrägstand ausgeglichen werden. Durch die axiale Verspannung über die Schraubverbindung 80 wird die Dichtkante 36 auf den Dichtsitz des Filterkopfes 10 gepresst. Das sphärische Lager mit den Schalenteilen 18, 20 wird verspannt und dadurch gegenseitig abgedichtet. Dies hat so keine Entsprechung im Stand der Technik.

## Patentansprüche

1. Filtervorrichtung mit einem Filterkopf (10) und mit einem Filtertopf (12) zur Aufnahme eines tauschbaren Filterelementes (14), **dadurch gekennzeichnet, dass** eine zwischen Filterkopf (10) und dem Filterelement (14) wirkende Ausgleichseinrichtung (16) vorhanden ist, die als Bestandteil des Filterelementes (14) zwei Schalenteile (18, 20) aufweist, von denen das eine Schalenteil (18) stationär am Filterelement (14) festgelegt und das andere Schalenteil (20) demgegenüber bewegbar geführt ist, und dass eines der beiden Schalenteile (20) eine Durchgangsöffnung (22) zur Führung eines Fluidstroms aufweist.

2. Filtervorrichtung nach Anspruch 1, **dadurch gekennzeichnet, dass** das eine stationäre Schalenteil (18) Bestandteil einer Endkappe (26) des Filterelementes (14) ist und dass das andere bewegbare Schalenteil (20) einen Kugelring ausbildet, der in Anlage mit dem stationären Schalenteil (18) ist.

3. Filtervorrichtung nach Anspruch 1, **dadurch gekennzeichnet, dass** das bewegbare Schalenteil (20) an seiner dem Filterkopf (10) zugewandten Seite eine ringförmige Dichteinrichtung (34) aufweist, die auf ihrer freien, dem Filterkopf (10) zugewandten Stirnseite einen Dichtring (36) aufweist, der im festgelegten Zustand des Filterelementes (14) gegen den Filterkopf (10) verpresst ist.

4. Filtervorrichtung nach einem der vorstehenden Ansprüche, **dadurch gekennzeichnet, dass** eine Anlagefläche (38) des Filterkopfes (10) für den Dichtring (36) eine schräg verlaufende Ebene (40) aufspannt.

5. Filtervorrichtung nach einem der vorstehenden Ansprüche, **dadurch gekennzeichnet, dass** bezogen auf die Durchgangsöffnung (22) das stationäre Schalenteil (18) eine konkav verlaufende Anlagefläche (48) aufweist, die in jeder Schwenkstellung des anderen Schalenteils (20) in Anlage mit einer konvex gekrümmten Anlagefläche (50) dieses Schalenteils (20) ist.

6. Filtervorrichtung nach einem der vorstehenden Ansprüche, **dadurch gekennzeichnet, dass** das stationäre Schalenteil (18) an seinen gegenüberliegenden freien Rändern, die einen hohlkugelartigen oder ringförmigen Aufnahmeraum (52) für das andere schwenkbare Schalenteil (20) definieren, jeweils einen Anschlagrand (54, 56) zur Begrenzung einer maximal möglichen Schwenkbewegung für dieses Schalenteil (20) aufweist.

7. Filtervorrichtung nach einem der vorstehenden Ansprüche, **dadurch gekennzeichnet, dass** die Endkappe (26) des Filterelementes (14) mit den beiden Schalenteilen (18, 20) außenumfangsseitig einen Dichtrand (58) zur Aufnahme eines Dichtringes (60) aufweist, der in Umfangsrichtung radial über den Außenumfang des Filtermediums (24) des Filterelementes (14) vorsteht.

8. Filtervorrichtung nach einem der vorstehenden Ansprüche, **dadurch gekennzeichnet, dass** der Dichtrand (58) der Endkappe (26) mit dem Dichtring (60) eine Ebene aufspannt, die von dem schwenkbaren Schalenteil (20) mit seiner ringförmigen Dichteinrichtung (36) in Richtung des Filterkopfes (10) zumindest teilweise übergriffen ist.

9. Filtervorrichtung nach einem der vorstehenden Ansprüche, **dadurch gekennzeichnet, dass** der Dichtrand (58) der Endkappe (26) mittels einzelner Stege (62) auf Abstand zu dem stationären Schalenteil (18) gehalten ist und dass einzelne Durchlassöffnungen (64) zwischen den Stegen (62) und dem Dichtrand (58) vorhanden sind.

10. Filtervorrichtung nach einem der vorstehenden Ansprüche, **dadurch gekennzeichnet, dass** der Filterkopf (10) ein federbelastetes Rückschlagventil (66) aufweist, das in seiner Schließstellung den Fluidweg zwischen der Durchgangsöffnung (22) des schwenkbaren Schalenteils (20) und einer Filtratabgabeöffnung (68) zur Führung eines Filtratstroms im Filterkopf (10) sperrt und in seiner Öffnungsstellung freigibt.

11. Filtervorrichtung nach einem der vorstehenden Ansprüche, **dadurch gekennzeichnet, dass** sich das Schließteil (70) des Rückschlagventils (66) in der Schließstellung federbelastet an einem im Filterkopf (10) im Fluidweg festgelegten Anlagering (72) abstützt, der einen Dichtsitz ausbildet.

12. Filtervorrichtung nach einem der vorstehenden Ansprüche, **dadurch gekennzeichnet, dass** der Filterkopf (10) mindestens ein Bypassventil (76) aufweist, das bei mit Partikelverschmutzung zugesetztem Filterelement (14) eine Fluidverbindung von der Unfiltratseite (78) zur Filtratabgabeseite, respektive Filtratabgabeöffnung (68), im Filterkopf (10) über die einzelnen Durchlassöffnungen (64) in der Endkappe (26) freigibt.

13. Filtervorrichtung nach einem der vorstehenden Ansprüche, **dadurch gekennzeichnet, dass** der Filtertopf (12) mit dem Filterelement (14) über eine Schraubverbindung (80) in wiederlösbarer Weise mit dem Filterkopf (10) verbunden ist und dass mit zunehmender Aufschraubtiefe der Dichtring (60) des Filterelementes (14) ebenso wie der Dichtring (36) auf der freien Stirnseite des schwenkbaren Schalenteils (20) gegen den Filterkopf (10) unter Bildung einer Abdichtung verpresst ist.

14. Filterelement, insbesondere für eine Filtervorrichtung nach einem der vorstehenden Ansprüche, wobei eine Ausgleichseinrichtung (16) vorhanden ist, die Bestandteil des Filterelementes (14) ist und die zwei Schalenteile (18, 20) aufweist, von denen das eine Schalenteil (18) stationär am Filterelement (14) festgelegt und das andere Schalenteil (20) demgegenüber bewegbar geführt ist, wobei eines der beiden Schalenteile (20) eine Durchgangsöffnung (22) zur Führung eines Fluidstroms aufweist,
wobei das eine stationäre Schalenteil (18) Bestandteil einer oberen Endkappe (26) des Filterelementes (14) ist, und
wobei das andere bewegbare Schalenteil (20) einen Kugelring ausbildet, der in Anlage mit dem stationären Schalenteil (18) ist,
**dadurch gekennzeichnet,**
**dass** das Filterelement ein Filtermedium oder Filterelementmaterial (24) aufweist, das sich zwischen der oberen Endkappe (26) und einer unteren Endkappe (28) erstreckt.

15. Filterelement nach Anspruch 14, **dadurch gekennzeichnet, dass** das bewegbare Schalenteil (20) eine ringförmige Dichteinrichtung (34) aufweist, die auf ihrer freien Stirnseite einen zur Umgebung hin axial vorstehenden Dichtring (36) aufweist.

16. Filterelement nach Anspruch 14 oder 15, **dadurch gekennzeichnet, dass** bezogen auf die Durchgangsöffnung (22) das stationäre Schalenteil (18) eine konkav verlaufende Anlagefläche (48) aufweist, die in jeder Schwenkstellung des anderen Schalenteils (20) in Anlage mit einer konvex gekrümmten Anlagefläche (50) dieses Schalenteils (20) ist.

17. Filterelement nach einem der Ansprüche 14 bis 16, **dadurch gekennzeichnet, dass** das stationäre Schalenteil (18) an seinen gegenüberliegenden freien Rändern, die einen hohlkugelartigen oder ringförmigen Aufnahmeraum (52) für das andere schwenkbare Schalenteil (20) definieren, jeweils einen Anschlagrand (54, 56) zur Begrenzung einer maximal möglichen Schwenkbewegung dieses Schalenteils (20) aufweist.

18. Filterelement nach einem der Ansprüche 14 bis 17, **dadurch gekennzeichnet, dass** die Endkappe (26) des Filterelementes (14) mit den beiden Schalenteilen (18, 20) außenumfangsseitig einen Dichtrand (58) zur Aufnahme eines Dichtringes (60) aufweist, der in Umfangsrichtung radial über den Außenumfang des Filtermediums (24) des Filterelementes (14) vorsteht.

19. Filterelement nach Anspruch 18, **dadurch gekennzeichnet, dass** der Dichtrand (58) der Endkappe (26) mit dem Dichtring (60) eine Ebene aufspannt, die von dem schwenkbaren Schalenteil (20) mit seiner ringförmigen Dichteinrichtung (34) axial vorstehend in Richtung der Umgebung zumindest teilweise übergriffen ist, dass der Dichtrand (58) der Endkappe (26) mittels einzelner Stege (62) auf Abstand zu dem stationären Schalenteil (18) gehalten ist und dass einzelne Durchlassöffnungen (64) zwischen den Stegen (62) und dem Dichtrand (58) vorhanden sind.

## Claims

1. Filter device having a filter head (10) and having a filter bowl (12) to receive a replaceable filter element (14), **characterised in that** a compensating device (16) is provided, acting between the filter head (10) and the filter element (14), said compensating device, as part of the filter element (14), comprising two shell parts (18, 20), of which one shell part (18) is fixed to the filter element (14) in a stationary manner and the other shell part (20) is guided movably opposite thereto, and **in that** one of the two shell parts (20) comprises a through opening (22) to guide a fluid flow.

2. Filter device according to claim 1, **characterised in that** one stationary shell part (18) is part of an end cap (26) of the filter element (14) and **in that** the other movable shell part (20) forms a spherical ring, which is in contact with the stationary shell part (18).

3. Filter device according to claim 1, **characterised in that** the movable shell part (20) comprises an annular sealing apparatus (34) on its side facing the filter head (10), said sealing apparatus comprising a sealing ring (36) on its free end face facing the filter head (10), said sealing ring being pressed against the filter head (10) when the filter element (14) is in the fixed state.

4. Filter device according to any of the preceding claims, **characterised in that** a contact face (38) of the filter head (10) for the sealing ring (36) spans an obliquely extending plane (40).

5. Filter device according to any of the preceding claims, **characterised in that**, in relation to the through opening (22), the stationary shell part (18) has a contact face (48) extending in a concave manner, which is in contact with a convex curved contact face (50) of the other shell part (20) in every swivel position of said shell part (20).

6. Filter device according to any of the preceding claims, **characterised in that** the stationary shell part (18), on its opposite free edges, which define a hollow sphere-like or annular receiving space (52) for the other swivelable shell part (20), in each case comprises a stop edge (54, 56) to limit a maximum possible swivel movement for this shell part (20).

7. Filter device according to any of the preceding claims, **characterised in that** the end cap (26) of the filter element (14), with the two shell parts (18, 20) comprises, on its outer circumferential side, a sealing rim (58) to receive a sealing ring (60), which protrudes radially, in the circumferential direction, over the outer circumference of the filter medium (24) of the filter element (14).

8. Filter device according to any of the preceding claims, **characterised in that** the sealing rim (58) of the end cap (26) with the sealing ring (60) spans a plane that is at least partially overlapped in the direction of the filter head (10) by the swivelable shell part (20) with its annular sealing apparatus (36).

9. Filter device according to any of the preceding claims, **characterised in that** the sealing rim (58) of the end cap (26) is held at a distance from the stationary shell part (18) by means of individual webs (62) and **in that** individual through openings (64) are provided between the webs (62) and the sealing rim (58).

10. Filter device according to any of the preceding claims, **characterised in that** the filter head (10) comprises a spring-loaded non-return valve (66), which, in its closed position, blocks the fluid path between the through opening (22) of the swivelable shell part (20) and a filtrate dispensing opening (68) to guide a filtrate flow in the filter head (10) and, in its open position, releases said fluid path.

11. Filter device according to any of the preceding claims, **characterised in that** the closing part (70) of the non-return valve (66), in its closed position, is supported in a spring-loaded manner on a contact ring (72) fixed in the filter head (10) in the fluid path, said contact ring forming a sealing seat.

12. Filter device according to any of the preceding claims, **characterised in that** the filter head (10) comprises at least one bypass valve (76), which, in the event of the filter element (14) being subject to particulate contamination, releases a fluid connection from the unfiltered medium side (78) to the filtrate dispensing side, or filtrate dispensing opening (68) respectively, in the filter head (10) via the individual through openings (64) in the end cap (26).

13. Filter device according to any of the preceding claims, **characterised in that** the filter bowl (12) along with the filter element (14) is connected via a screw connection (80) in a releasable manner to the filter head (10) and **in that**, as the screw-on depth increases, the sealing ring (60) of the filter element (14) along with the sealing ring (36) on the free end face of the swivelable shell part (20) is pressed against the filter head (10), forming a seal.

14. Filter element, particularly for a filter device according to any of the preceding claims, wherein a compensating device (16) is provided that is part of the filter element (14) and comprises two shell parts (18, 20), one shell part (18) of which is fixed to the filter element (14) in a stationary manner, and the other shell part (20) is guided in a movable manner opposite thereto, wherein one of the two shell parts (20) comprises a through opening (22) to guide a fluid flow,
wherein the stationary shell part (18) is part of an upper end cap (26) of the filter element (14), and
wherein the other movable shell part (20) forms a spherical ring, which is in contact with the stationary shell part (18),
**characterised in that**
the filter element comprises a filter medium or filter element material (24), which extends between the upper end cap (26) and a lower end cap (28).

15. Filter element according to claim 14, **characterised in that** the movable shell part (20) comprises an annular sealing apparatus (34), which, on its free end face, comprises a sealing ring (36) protruding axially towards the environment.

16. Filter element according to either claim 14 or 15, **characterised in that**, in relation to the through opening (22), the stationary shell part (18) has a contact face (48) extending in a concave manner, which is in contact with a convex curved contact face (50) of the other shell part (20) in every swivel position of said shell part (20).

17. Filter element according to any of claims 14 to 16, **characterised in that** the stationary shell part (18), on its opposite free edges, which define a hollow sphere-like or annular receiving space (52) for the other swivelable shell part (20), in each case comprises a stop edge (54, 56) to limit a maximum possible swivel movement for this shell part (20).

18. Filter element according to any of claims 14 to 17, **characterised in that** the end cap (26) of the filter element (14) with the two shell parts (18, 20) comprises, on its outer circumferential side, a sealing rim (58) to receive a sealing ring (60), which protrudes radially, in the circumferential direction, over the outer circumference of the filter medium (24) of the filter element (14).

19. Filter element according to claim 18, **characterised in that** the sealing rim (58) of the end cap (26) with the sealing ring (60) spans a plane, which is at least partially overlapped by the swivelable shell part (20) with its annular sealing apparatus (34) protruding axially in the direction of the environment, **in that** the sealing rim (58) of the end cap (26) is held at a distance from the stationary shell part (18) by means of individual webs (62) and **in that** individual through openings (64) are provided between the webs (62) and the sealing rim (58).

## Revendications

1. Installation de filtration comprenant une tête (10) de filtre et un pot (12) de filtre de logement d'un élément (14) de filtre remplaçable, **caractérisée en ce qu'**il y a un dispositif (16) de compensation, qui agit entre la tête (10) de filtre et l'élément (14) de filtre et qui a, comme partie constitutive de l'élément (14) de filtre, deux parties (18, 20) de coque, dont la une partie (18) de coque est fixée de manière fixe à l'élément (14) de filtre, et dont, en revanche, l'autre partie (20) de coque est guidée avec possibilité de se déplacer, et **en ce que** l'une des deux parties (20) de coque a une ouverture (22) de passage pour la conduite d'un courant de fluide.

2. Installation de filtration suivant la revendication 1, **caractérisée en ce que** la une partie (18) de coque fixe est une partie constitutive d'une coiffe (26) d'extrémité de l'élément (14) de filtre et **en ce que** l'autre partie (20) de coque mobile constitue un anneau sphérique, qui est en contact avec la partie (18) de coque fixe.

3. Installation de filtration suivant la revendication 1, **caractérisée en ce que** la partie (20) de coque mobile a, de son côté, tourné vers la tête (10) de filtre, un dispositif (34) annulaire d'étanchéité, qui a, sur son côté frontal libre, tourné vers la tête (10) de filtre, une bague (36) d'étanchéité, qui, lorsque l'élément (14) de filtre est à l'état fixé, est pressée sur la tête (10) de filtre.

4. Installation de filtration suivant l'une des revendications précédentes, **caractérisée en ce qu'**une surface (38) de contact de la tête (10) de filtre pour la bague (36) d'étanchéité se déploie sur un plan (40) s'étendant de manière inclinée.

5. Installation de filtration suivant l'une des revendications précédentes, **caractérisée en ce que**, rapporté à l'ouverture (22) de passage, la partie (18) de coque fixe a une surface (48) de contact s'étendant de manière concave, qui est en chaque position de pivotement de l'autre partie (20) de coque en contact avec une surface (50) de contact incurvée de manière convexe de cette partie (20) de coque.

6. Installation de filtration suivant l'une des revendications précédentes, **caractérisée en ce que** la partie (18) de coque fixe a, à ses bords libres opposés, qui définissent un espace (52) de type en sphère creuse ou annulaire de réception de l'autre partie (20) de coque pivotante, respectivement un bord (54, 56) de butée de limitation d'un mouvement de pivotement possible au maximum de cette partie (20) de coque.

7. Installation de filtration suivant l'une des revendications précédentes, **caractérisée en ce que** la coiffe (26) d'extrémité de l'élément (14) de filtre a, avec les deux parties (18, 20) de coque, du côté du pourtour extérieur, un bord (58) d'étanchéité de réception d'une bague (60) d'étanchéité, qui fait saillie dans la direction du pourtour radialement au-delà du pourtour extérieur du milieu (24) filtrant de l'élément (14) de filtre.

8. Installation de filtration suivant l'une des revendications précédentes, **caractérisée en ce que** le bord (58) d'étanchéité de la coiffe (26) d'extrémité se déploie avec la bague (60) d'étanchéité dans un plan, qui est chevauchée au moins en partie, dans la direction de la tête (10) de filtre, par la partie (20) de coque pivotante par son dispositif (36) d'étanchéité annulaire.

9. Installation de filtration suivant l'une des revendications précédentes, **caractérisée en ce que** le bord (58) d'étanchéité de la coiffe (26) d'extrémité est maintenu au moyen d'entretoises (62) individuelles à distance de la partie (18) de coque fixe et **en ce qu'**il est prévu des ouvertures (64) individuelles de passage entre les entretoises (62) et le bord (58) d'étanchéité.

10. Installation de filtration suivant l'une des revendications précédentes, **caractérisée en ce que** la tête (10) de filtre a un clapet antiretour (66) soumis à l'action d'un ressort, qui, dans sa position de fermeture, obture le trajet de fluide entre l'ouverture (22) de passage de la partie (20) de coque pivotante et une ouverture (68) de distribution de filtrat pour la conduite d'un courant de filtrat dans la tête (10) de filtre et le dégage dans sa position d'ouverture.

11. Installation de filtration suivant l'une des revendications précédentes, **caractérisée en ce que** la partie (70) de fermeture du clapet antiretour (66) s'appuie dans la position de fermeture en étant soumis à l'action d'un ressort sur une bague (72) de contact, qui est fixée dans la tête (10) de filtre dans le chemin de fluide, et qui forme un siège d'étanchéité.

12. Installation de filtration suivant l'une des revendications précédentes, **caractérisée en ce que** la tête (10) de filtre a au moins une soupape (76) de dérivation, qui, lorsque l'élément (14) de filtre est saturé de particules de saleté, dégage, dans la tête (10) de filtre par les ouvertures (64) individuelles de passage dans la coiffe (26) d'extrémité, une liaison pour du fluide allant du côté (78) du non filtrat au côté de distribution du filtrat, ouverture (68) respective de distribution du filtrat.

13. Installation de filtration suivant l'une des revendications précédentes, **caractérisée en ce que** le pot (12) de filtre avec l'élément (14) de filtre est relié à la tête (10) de filtre de manière dévissable par un vissage (80) et **en ce que**, au fur et à mesure qu'augmente la profondeur du vissage, la bague (60) d'étanchéité de l'élément (14) de filtre, tout comme la bague (36) d'étanchéité du côté frontal libre de la partie (20) de coque pivotante, est pressée sur la tête (10) de filtre avec formation d'une étanchéité.

14. Elément de filtre, en particulier pour une installation de filtration suivant l'une des revendications précédentes, dans lequel il y a un dispositif (16) de compensation, qui a la partie constitutive de l'élément (14) de filtre et les deux parties (18, 20) de coque, dont la une partie (18) de coque est fixée de manière fixe à l'élément (14) de filtre, et l'autre partie (20) de coque est en revanche guidée de manière à pouvoir se déplacer, dans lequel l'une des deux parties (20) de coque a une ouverture (22) de passage pour la conduite d'un courant de fluide,
dans lequel la une partie (18) de coque fixe est une partie constitutive d'une coiffe (26) d'extrémité supérieure de l'élément (14) de filtre,
dans lequel l'autre partie (20) de coque mobile constitue un anneau sphérique, qui est en contact avec la partie (18) de coque fixe,
**caractérisé**
**en ce que** l'élément de filtre a un milieu filtrant ou une matière (24) d'élément filtrant, qui s'étant entre la coiffe (26) d'extrémité supérieure et une coiffe (28) d'extrémité inférieure.

15. Elément de filtre suivant la revendication 14, **caractérisé en ce que** la partie (20) de coque mobile a un dispositif (34) d'étanchéité annulaire, qui a, sur son côté frontal libre, une bague (36) d'étanchéité faisant saillie axialement vers ce qui l'entoure.

16. Elément de filtre suivant la revendication 14 ou 15, **caractérisé en ce que**, rapporté à l'ouverture (22) de passage, la partie (18) de coque fixe a une surface (48) de contact s'étendant de manière concave, qui est en chaque position de pivotement de l'autre partie (20) de coque en contact avec une surface (50) de contact incurvée de manière convexe de cette partie (20) de coque.

17. Elément de filtre suivant l'une des revendications 14 à 16, **caractérisé en ce que** la partie (18) de coque fixe a, à ses bords libres opposés, qui définissent un espace (52) de type en sphère creuse ou annulaire de réception de l'autre partie (20) de coque pivotante, respectivement un bord (54, 56) de butée de limitation d'un mouvement de pivotement possible au maximum de cette partie (20) de coque.

18. Elément de filtre suivant l'une des revendications 14 à 17, **caractérisé en ce que** la coiffe (26) d'extrémité de l'élément (14) de filtre a, avec les deux parties (18, 20) de coque du côté du pourtour extérieur, un bord (58) d'étanchéité de réception d'une bague (60) d'étanchéité, qui fait saillie dans la direction du pourtour radialement au-delà du pourtour extérieur du milieu (24) filtrant de l'élément (14) de filtre.

19. Elément de filtre suivant la revendication 18, **caractérisé en ce que** le bord (58) d'étanchéité de la coiffe (26) d'extrémité se déploie avec la bague (60) d'étanchéité dans un plan, qui est chevauchée, au moins en partie, dans la direction de ce qui l'entoure en saillie axialement, par sa partie (20) de coque pivotante par son dispositif (34) d'étanchéité annulaire, **en ce que** le bord (58) d'étanchéité de la coiffe (26) d'extrémité est maintenu au moyen d'entretoises (62) individuelles à distance de la partie (18) de coque fixe et **en ce qu'**il est prévu des ouvertures (64) individuelles de passage entre les entretoises (62) et le bord (58) d'étanchéité.
